# EUROPEAN PATENT APPLICATION

(11) **EP 4 848 358 A1**
(43) Date of publication of application: **02.12.2026**
(21) Application number: 24919658.5
(22) Date of filing: 19.07.2024
(51) Int. Cl.: H01M 4/36

(54) **NEGATIVE ELECTRODE MATERIAL, PREPARATION METHOD THEREFOR, AND USE THEREOF**

(30) Priority: 22.01.2024 CN 202410092993
(71) Applicant: Tianmulake Excellent Anode Materials Co, Ltd., Liyang, Jiangsu 213330 (CN)
(72) Inventor: CHENG, Wenbo, hangzhou, Jiangsu 213300 (CN); LUO, Tianmi, hangzhou, Jiangsu 213300 (CN); YIN, Yingying, hangzhou, Jiangsu 213300 (CN); LIU, Bonan, hangzhou, Jiangsu 213300 (CN); XIONG, Rui, hangzhou, Jiangsu 213300 (CN); LUO, Fei, hangzhou, Jiangsu 213300 (CN)
(74) Representative: Glück Kritzenberger Patentanwälte PartGmbB
(86) International application number: PCT/CN2024/106497
(87) International publication number: WO 2025/156574

(57) **Abstract**

A negative electrode material, a preparation method therefor, and a use thereof. The structure of the negative electrode material comprises a core and a shell; the core comprises the following components: porous carbon, a first solid electrolyte, and nano silicon particles; the first solid electrolyte is loaded on the surface of the porous carbon and the pore structure of the porous carbon; the nano silicon particles are deposited in the pore structure of the porous carbon; the outer surface of the core is coated with the shell; and the shell comprises the following component(s): a carbon material and/or a second solid electrolyte. In the negative electrode material, the first solid electrolyte in the core is loaded on the surface of the porous carbon, such that generation of electrochemically inactive silicon carbide due to direct contact between the nano silicon particles and the porous carbon is avoided, and the actual capacity of a lithium-ion battery can be increased; coating of the shell can improve the initial coulombic efficiency of the lithium-ion battery, and can also improve the rate capability and the fast charging performance; and the addition of the first solid electrolyte and the second solid electrolyte can improve the performance of the lithium-ion battery in an extreme environment.

## Description

### CROSS-REFERENCE TO RELATED APPLICATIONS

This application claims priority to Chinese Patent Application No. 202410092993.3, filed on January 22, 2024 and entitled "NEGATIVE ELECTRODE MATERIAL, PREPARATION METHOD THEREFOR, AND USE THEREOF".

### BACKGROUND OF THE INVENTION

### 1. Technical Field

The present invention relates to the field of lithium-ion battery materials, and in particular, relates to a negative electrode material, a preparation method therefor, and use thereof.

### 2. Description of Related Art

A negative electrode material of a lithium-ion battery is an important component of the lithium-ion battery, and mainly functions to store and release lithium ions. At present, the negative electrode material of the lithium-ion battery mainly includes a carbon material and a lithium titanate material. With the rapid development and continuous iteration of the entire industry, some new negative electrode materials have gradually begun to take over the market, for example, silicon-based negative electrode materials (for silicon oxide negative electrodes and silicon-carbon negative electrodes) with high specific capacity and high storage capability.

At present, silicon-carbon negative electrode materials prepared mainly by chemical vapor deposition have exhibited excellent performance. This is because vapor deposition reduces the size of nano silicon particles, effectively alleviating a series of problems caused by the expansion of nano silicon particles. In addition, the vapor deposition ensures the uniform deposition of the nano silicon particles, and inhibits the agglomeration of the nano silicon particles, thereby enhancing the cycling performance of the lithium-ion battery.

However, during the preparation of the silicon-carbon negative electrode materials by chemical vapor deposition, the nano silicon particles are directly deposited in the pores of the porous carbon, and are very likely to react with the carbon in the porous carbon due to their high activity, resulting in electrochemically inactive silicon carbide. Consequently, the capacity of the silicon-carbon negative electrode materials is reduced. In addition, the demand for fast charging of batteries necessitates the development of a silicon-carbon negative electrode material with high-rate performance. Hence, this poses an even more stringent challenge for the silicon-carbon negative electrode material in terms of rapid transport of electrons and ions. Moreover, regarding the use of batteries in an extreme environment, for example, with high/low temperature and high/low pressure, there have been requirements set for the application of the silicon-carbon negative electrode material in the extreme environment, in order to ensure the normal charging and discharging of the battery.

Therefore, how to address issues such as the generation of inactive silicon carbide during the preparation of the silicon-carbon negative electrode material and the improvement of the fast-charging performance of batteries and their performance in extreme environments has become one of the research hotspots at present.

### BRIEF SUMMARY OF THE INVENTION

In view of the defects existing in the prior art, an object of the present invention is to provide a negative electrode material, a preparation method therefor, and use thereof, where the negative electrode material has a core-shell structure, a first solid electrolyte in the core can inhibit generation of electrochemically inactive silicon carbide, and a carbon material in the shell or the first solid electrolyte can improve the electronic conductivity and ionic conductivity of the negative electrode material.

To achieve the above object, in a first aspect, the present invention provides a negative electrode material, wherein a structure of the negative electrode material includes a core and a shell;
the core includes the following components: porous carbon, a first solid electrolyte, and nano silicon particles; the first solid electrolyte is loaded on a surface of the porous carbon and a pore structure of the porous carbon; the nano silicon particles are deposited in the pore structure of the porous carbon;
an outer surface of the core is coated with the shell; and the shell includes the following component(s): a carbon material and/or a second solid electrolyte.

Preferably, the first solid electrolyte is an oxide solid electrolyte and/or a sulfide solid electrolyte.

Preferably, the second solid electrolyte is an oxide solid electrolyte and/or a sulfide solid electrolyte.

In a second aspect, the present invention provides a preparation method for the negative electrode material according to any description in the first aspect above. The preparation method includes:
adding raw materials of a first solid electrolyte and a raw material of porous carbon into a solvent, and performing stirring to obtain a slurry;
performing heat treatment on the slurry to obtain a porous carbon material loaded with the first solid electrolyte;
in an inert atmosphere, performing vapor deposition on the porous carbon material and a silicon source gas to obtain a porous carbon composite material including the porous carbon, the first solid electrolyte, and nano silicon particles; and
in the inert atmosphere, performing coating treatment on the porous carbon composite material to obtain a shell including a carbon material and/or a second solid electrolyte, thereby obtaining a negative electrode material.

Preferably, the heat treatment comprises spray drying and high-temperature calcining;
the spray drying is performed under the following conditions: at an air inlet temperature of 150°C-400°C, and at an air outlet temperature of 80°C-200°C;
the high-temperature calcining is performed under the following conditions: at a temperature of 400°C-800°C for 1 hour to 5 hours.

Preferably, the vapor deposition is performed at a temperature of 400°C-1000°C for 2 hours to 15 hours.

Preferably, the coating treatment includes coating with carbon and/or coating with the second solid electrolyte;
the coating with carbon is performed under the following conditions: at a temperature of 300°C-1000°C for 2 hours to 20 hours;
the coating with the second solid electrolyte includes a spray drying stage and a high-temperature calcining stage;
the spray drying stage occurs under the following conditions: at an air inlet temperature of 150°C-400°C, and at an air outlet temperature of 80°C-200°C; and
the high-temperature calcining stage occurs under the following conditions: at a temperature of 400°C-800°C for 1 hour to 5 hours.

Further preferably, a carbon source for the coating with carbon includes one or more of alkane, alkene, and alkyne.

In a third aspect, the present invention provides a negative electrode plate, including the negative electrode material according to any description in the first aspect or the negative electrode material prepared with the preparation method according to any description in the second aspect.

In a fourth aspect, the present invention provides a lithium-ion battery, including the negative electrode plate according to any description in the third aspect, wherein an electrolyte of the lithium-ion battery is an aqueous electrolyte or an oil-based electrolyte.

The negative electrode material provided in the embodiments of the present invention has the core-shell structure consisting of the core and the shell. The first solid electrolyte in the core is loaded on the surface of the porous carbon, such that generation of electrochemically inactive silicon carbide due to direct contact between the nano silicon particles and the porous carbon is avoided, and the actual capacity of a lithium-ion battery can be increased; coating of the shell can reduce the specific surface area of the negative electrode material, improve the initial coulombic efficiency of the lithium-ion battery, and can also improve the electronic conductivity and the ionic conductivity, thereby improving the rate capability and the fast charging performance of the lithium-ion battery; and the addition of the first solid electrolyte and the second solid electrolyte can facilitate improvement of the performance of the negative electrode material in an extreme environment.

### BRIEF DESCRIPTION OF THE SEVERAL VIEWS OF THE DRAWINGS

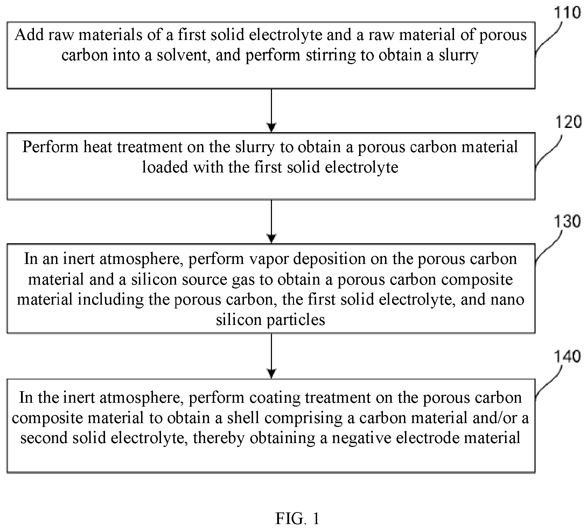

FIG.1 shows a flowchart of a preparation method for a negative electrode material according to an embodiment of the present invention.

### DETAILED DESCRIPTION OF THE INVENTION

To make the objects, technical solutions and advantages of the present invention clearer, the present invention is further described in detail below in conjunction with the accompanying drawings. Obviously, the embodiments described are merely some embodiments of the present invention, and do not constitute all possible embodiments. Based on the embodiments of the present invention, all other embodiments obtained by a person of ordinary skill in the art without making creative efforts shall fall within the protection scope of the present invention.

The technical solutions of the present invention will be further described in detail below in combination with the accompanying drawings and embodiments.

An embodiment of the present invention provides a negative electrode material. A structure of the negative electrode material includes a core and a shell.

The core may include the following components: porous carbon, a first solid electrolyte, and nano silicon particles. The first solid electrolyte is loaded on a surface of the porous carbon and a pore structure of the porous carbon. The first solid electrolyte may be an oxide solid electrolyte and/or a sulfide solid electrolyte. , The oxide solid electrolyte may include lithium aluminum titanium phosphate (Li_{1.4}Al_{0.4}Ti_{1.6}(PO₄)3, LATP), lithium lanthanum titanium oxide (Li_{0.33}La_{0.56}TiO₃, LLTO), lithium lanthanum zirconium oxide (Li₇La₃Zr₂O₁₂, LLZO), etc. The sulfide solid electrolyte may include Li₃PS₄, Li₁₀GeP₂S₁₂, etc.

When the negative electrode material is applied to a lithium-ion battery, the first solid electrolyte in the core can improve the interfacial transport rate of lithium ions during electrochemical reaction processes, and can also improve the performance for the negative electrode material in an extreme environment. Further, the first solid electrolyte is loaded on the surface of the porous carbon and the pore structure of the porous carbon, avoiding direct contact between the nano silicon particles and pore structure of the porous carbon, such that generation of electrochemically inactive silicon carbide can be suppressed, thereby increasing the actual capacity of a lithium-ion battery.

The shell includes the following component(s): a carbon material and/or a second solid electrolyte. The second solid electrolyte includes an oxide solid electrolyte and/or a sulfide solid electrolyte. Tthe oxide solid electrolyte includes lithium aluminum titanium phosphate (Li_{1.4}Al_{0.4}Ti_{1.6}(PO₄)₃, LATP), lithium lanthanum titanium oxide (Li_{0.33}La_{0.56}TiO₃, LLTO), lithium lanthanum zirconium oxide (Li₇La₃Zr₂O₁₂, LLZO), etc. The sulfide solid electrolyte includes Li₃PS₄, Li₁₀GeP₂S₁₂, etc. A thickness of the shell may be 2nm-50nm. The shell coats the outer surface of the core to constitute the core-shell structure of the negative electrode material. The carbon material inside the shell may increase the electronic conductivity of the negative electrode material, and the second solid electrolyte may increase the ionic conductivity of the negative electrode material. Meanwhile, the coating of the shell reduces the specific surface area of the negative electrode material and increases the initial coulombic efficiency of the lithium-ion battery.

In summary, the negative electrode material provided in the embodiments of the present invention has the core-shell structure consisting of the core and the shell. The first solid electrolyte in the core is loaded on the surface of the porous carbon, such that generation of electrochemically inactive silicon carbide due to direct contact between the nano silicon particles and the porous carbon is avoided, and the actual capacity of a lithium-ion battery can be increased; coating of the shell can reduce the specific surface area of the negative electrode material, improve the initial coulombic efficiency of the lithium-ion battery, and can also improve the electronic conductivity and the ionic conductivity, thereby improving the rate capability and the fast charging performance of the lithium-ion battery; and the addition of the first solid electrolyte and the second solid electrolyte can facilitate improvement of the performance of the negative electrode material in an extreme environment.

An embodiment of the present invention further provides a preparation method for the negative electrode material described above, with a process shown in FIG. 1. The preparation method includes steps as follows.

In step 110, raw materials of a first solid electrolyte and a raw material of porous carbon are added into a solvent and stirred to obtain a slurry.

Specifically, the raw materials of the first solid electrolyte are added to a solvent and stirred for a predefined period of time to completely dissolve the first solid electrolyte in the solvent. Then, the raw material of the porous carbon is added, followed by stirring for a period of time, to evenly mix the raw materials of the first solid electrolyte and the raw material of the porous carbon. The raw materials of the first solid electrolyte may include a raw material of oxide solid electrolyte and a raw material of sulfide solid electrolyte, for example, an elementary substance, or a compound, containing lithium, lanthanum, aluminum, titanium, zirconium, phosphorus, oxygen, sulfur, germanium, etc. The raw material of the porous carbon includes activated carbon, carbon molecular sieve, active carbon fiber, etc. The solvent may be deionized water or ethanol. The mass fraction of the ethanol may be 50%-75%.

In step 120, heat treatment is performed on the slurry to obtain a porous carbon material loaded with the first solid electrolyte.

The heat treatment includes two stages, namely, spray drying and high-temperature calcining. The spray drying may endow the porous carbon material with uniform particle size and small particle diameter. The high-temperature calcining may further remove the residual solvent or the like from the spray-dried particles and increase the purity and dryness to make the particles more uniform and refined, and may further improve the heat resistance of the material.

The spray drying is performed under the following conditions: at an air inlet temperature of 150°C-400°C, preferably 200°C-300°C, and at an air outlet temperature of 80°C-200°C, preferably 100°C-160°C.

The high-temperature calcining may be performed in a high-temperature furnace. The inert atmosphere for the high-temperature calcining includes one or more of nitrogen, argon, and helium. The gas flow rate is 3 L/min-10 L/min, preferably 5 L/min-8 L/min. The high temperature furnace is heated at a rate of 2°C/min to 8°C/min, preferably, 4°C/min to 6°C/min. The high-temperature calcining is performed under the following conditions: at a temperature of 400°C-800°C, preferably 500°C-700°C for 4 hours to 5 hours, preferably 2.5 hours to 3.5 hours.

This process mainly involves loading the first solid electrolyte on a surface of the raw material of porous carbon and a pore structure of the raw material of porous carbon.

In step 130, in an inert atmosphere, vapor deposition is performed on the porous carbon material and a silicon source gas to obtain a porous carbon composite material including the porous carbon, the first solid electrolyte, and nano silicon particles.

The inert atmosphere includes one or more of nitrogen, argon, and helium. The vapor deposition may be performed in a deposition furnace. First, the inert gas is introduced into the deposition furnace at a predefined gas flow rate to create the inert atmosphere. The inert atmosphere may include one or more of nitrogen, argon, and helium, and the gas flow rate may be 15 L/min. Then, the deposition furnace is heated to 400°C-1000°C, preferably 600°C-800°C, at a rate of 2°C/min-8°C/min, preferably 4°C/min-6°C/min, and held at that temperature for 30 min-40 min, thereby keeping the temperature of the deposition furnace stable. Finally, the silicon source gas and the inert gas are introduced into the deposition furnace together at a preset ratio, and the temperature is maintained for 2 hours to 15 hours, preferably 5 hours to 10 hours, for vapor deposition. The preset ratio may be 1:5-4:5, preferably 1:2. The silicon source gas may include, but is not limited to, silane, disilane, and other silicon-containing alkanes. In this way, the porous carbon composite material is obtained to serve as the core of the negative electrode material. Since the first solid electrolyte is loaded on the surface and pore structure of the porous carbon, the direct contact between the nano silicon particles and the porous carbon is blocked, which greatly reducing the probability of silicon carbide generation. When the negative electrode material is applied to a lithium-ion battery, the actual capacity of the lithium-ion battery can be increased.

In step 140, in the inert atmosphere, coating treatment is performed on the porous carbon composite material to obtain a shell including a carbon material and/or a second solid electrolyte, thereby obtaining a negative electrode material.

The coating treatment mainly involves forming the shell of the negative electrode material, which includes coating with carbon and/or coating with the second solid electrolyte. A carbon source for the coating with carbon includes one or more of alkane, alkene, and alkyne. Coating with carbon may be performed in a coating furnace, and a ratio of the inert gas to a carbon source may be 1:3-4:5, preferably 3:5. The coating treatment may be performed at a temperature of 300°C-1000°C, preferably 500°C-800°C, for 2 hours to 20 hours, preferably 8 hours to 16 hours. A thickness for the coating treatment may be 2 nm-50 nm.

The coating with the second solid electrolyte includes two stages, namely, a spray drying stage and a high-temperature calcining stage.

The spray drying stage occurs under the following conditions: at an air inlet temperature of 150°C-400°C, and at an air outlet temperature of 80°C-200°C. The high-temperature calcining stage occurs under the following conditions: at a temperature of 400°C-800°C for 1 hour to 5 hours.

It should be noted that there is no limitation on the specific order when both coating with carbon and coating with the second solid electrolyte are adopted. The coating treatment allows for formation of the shell of the negative electrode material, such that the electronic conductivity and ionic conductivity of the negative electrode material are increased, favorably improving the rate performance and fast charging performance of the lithium-ion battery. Furthermore, the coating treatment reduces the specific surface area of the negative electrode material to a certain extent, favorably improving the initial coulombic efficiency of the lithium-ion battery.

According to the preparation method for the negative electrode material provided by the embodiments of the present invention, the first solid electrolyte is first loaded onto the surface of the raw material of porous carbon by heat treatment; when the silicon particles are deposited in the pore structure of the raw material of porous carbon, the first solid electrolyte can avoid direct contact between the nano silicon particles and the raw material of porous carbon, thereby suppressing the generation of electrochemically inactive silicon carbide and improving the actual capacity of the lithium-ion battery; and by means of coating treatment, the electronic conductivity and ionic conductivity of the negative electrode material are further increased, which favorably improves the rate performance and fast charging performance of the lithium-ion battery, while reducing the specific surface area of the negative electrode material and improving the initial coulombic efficiency of the lithium-ion battery. The addition of the first solid electrolyte and the second solid electrolyte has advantages to improve the performance of the lithium-ion battery in an extreme environment.

The negative electrode material provided by the embodiments of the present invention can be applied to the electrode material of the lithium-ion battery.

For better understanding of the technical solutions provided by the present invention, a plurality of specific examples are described below to illustrate the specific processes of preparing the negative electrode material using the preparation method provided in the aforementioned embodiments of the present invention, as well as the electrochemical properties of the prepared negative electrode material.

### Examplary Embodiment 1

In a first step, 18.13 g of lithium acetate, 20.09 g of aluminum nitrate nonahydrate, 69.02 g of ammonium dihydrogen phosphate, and 120.44 g of tetrabutyl titanate were weighed out as raw materials of the first solid electrolyte, added to 45 kg of deionized water, and then stirred for 1.5 hours. Then, 7.5 kg of a raw material of porous carbon was added, followed by stirring for 3 hours, to obtain a slurry.

In a second step, the slurry was first subjected to spray drying treatment at an air inlet temperature of 200°C and an air outlet temperature of 120°C to obtain sprayed particles. Then, the sprayed particles were placed in a high-temperature furnace at a nitrogen flow rate of 3 L/min. Then, the high-temperature furnace was heated to 550°C at a rate of 3°C/min and held at that temperature for 2.5 hours, to obtain an LATP-loaded porous carbon material. LATP accounted for 1% of the total mass of the raw material of porous carbon.

In a third step, 2.5 kg of the porous carbon material was placed in a deposition furnace, nitrogen was introduced into the deposition furnace at a gas flow rate of 15 L/min for the purpose of protection, and the deposition furnace was heated to 600°C at a rate of 2°C/min and held at that temperature for 35 min. Next, a gas mixture of silane and nitrogen was introduced at a ratio of 10 L/min:50 L/min. The temperature was further maintained for 5.5 hours to allow the porous carbon material and the silane to undergo vapor deposition, thereby obtaining a porous carbon composite material including the porous carbon, LATP, and nano silicon particles.

In a fourth step, in a nitrogen atmosphere, the porous carbon composite material was placed in a coating furnace. Then, a gas mixture of nitrogen and methane was introduced into the coating furnace at a ratio of 15 L/min:25 L/min. The coating furnace was then heated to 650°C and held at that temperature for 7.5 hours, to form a carbon shell, thereby obtaining a negative electrode material having a carbon shell and a core.

Afterwards, the prepared negative electrode was used to prepare electrode plates of a lithium-ion battery, and the electrode plates were assembled into button-type half-cells for testing, with details as follows.

First, the aforementioned negative electrode material, a conductive agent Super P, and a binder sodium carboxymethylcellulose were added to a mortar at a mass ratio of 8:1:1 and then ground. Then deionized water was added. A resulting mixture was pulped in a pulper to form a slurry, which was then coated onto a copper-foil current collector. Afterwards, the copper-foil current collector as an electrode plate was dried in a vacuum oven at 80°C for 12 hours. The dried electrode plate was then cut into discs with a diameter of 14 mm to serve as electrodes for the button-type half-cell.

Next, these electrode plates were assembled into button-type half-cells in a fluorine-filled glove box. An aqueous electrolyte for the button-type half-cells was 1 mol/L lithium hexafluorophosphate (LiPF₆), with a solvent for the electrolyte consisting of ethylene carbonate (EC), dimethyl carbonate (DMC), and diethyl carbonate (DEC) at a volume ratio of 1:1:1. A lithium plate was used as a counter electrode.

Finally, testing was conducted on a LAND battery testing system to evaluate the electrochemical performance of the button-type half-cells. The test condition was as follows: voltage window: 0.01 V-2 V.

### Examplary Embodiment 2

In a first step, 36.27 g of lithium acetate, 39.43 g of aluminum nitrate nonahydrate, 135.47 g of ferrous dihydrogen phosphate, and 236.40 g of tetrabutyl titanate were weighed out as raw materials of the first solid electrolyte, added to 45 kg of deionized water, and then stirred for 1.5 hours. Then, 7.5 kg of a raw material of porous carbon was added, followed by stirring for 3 hours, to obtain a slurry.

In a second step, the slurry was first subjected to spray drying treatment at an air inlet temperature of 200°C and an air outlet temperature of 120°C to obtain sprayed particles. Then, the sprayed particles were placed in a high-temperature furnace at a nitrogen flow rate of 3 L/min. Then, the high-temperature furnace was heated to 550°C at a rate of 3°C/min and held at that temperature for 2.5 hours, to obtain an LATP-loaded porous carbon material. LATP accounted for 2% of the total mass of the raw material of porous carbon.

In a third step, 2.5 kg of the porous carbon material was placed in a deposition furnace, nitrogen was introduced into the deposition furnace at a gas flow rate of 15 L/min for the purpose of protection, and the deposition furnace was heated to 600°C at a rate of 2°C/min and held at that temperature for 35 min. Next, a gas mixture of silane and nitrogen was introduced at a ratio of 10 L/min:50 L/min. The temperature was further maintained for 5.5 hours to allow the porous carbon material and the silane to undergo vapor deposition, thereby obtaining a porous carbon composite material including the porous carbon, LATP, and nano silicon particles.

In a fourth step, in a nitrogen atmosphere, the porous carbon composite material was placed in a coating furnace. Then, a gas mixture of nitrogen and methane was introduced into the coating furnace at a ratio of 15 L/min:25 L/min. The coating furnace was then heated to 650°C and held at that temperature for 7.5 hours, to form a carbon shell, thereby obtaining a negative electrode material having a carbon shell and a core.

Afterwards, button-type half-cells were assembled and tested as in Example 1.

### Examplary Embodiment 3

In a first step, 90.67 g of lithium acetate, 98.58 g of aluminum nitrate nonahydrate, 338.69 g of ammonium dihydrogen phosphate, and 591 g of tetrabutyl titanate were weighed out as raw materials of the first solid electrolyte, added to 45 kg of deionized water, and then stirred for 1.5 hours. Then, 7.5 kg of a raw material of porous carbon was added, followed by stirring for 3 hours, to obtain a slurry.

In a second step, the slurry was first subjected to spray drying treatment at an air inlet temperature of 200°C and an air outlet temperature of 120°C to obtain sprayed particles. Then, the sprayed particles were placed in a high-temperature furnace at a nitrogen flow rate of 3 L/min. Then, the high-temperature furnace was heated to 550°C at a rate of 3°C/min and held at that temperature for 2.5 hours, to obtain an LATP-loaded porous carbon material. LATP accounted for 5% of the total mass of the raw material of porous carbon.

In a third step, 2.5 kg of the porous carbon material was placed in a deposition furnace, nitrogen was introduced into the deposition furnace at a gas flow rate of 15 L/min for the purpose of protection, and the deposition furnace was heated to 600°C at a rate of 2°C/min and held at that temperature for 35 min. Next, a gas mixture of silane and nitrogen was introduced at a ratio of 10 L/min:50 L/min. The temperature was further maintained for 5.5 hours to allow the porous carbon material and the silane to undergo vapor deposition, thereby obtaining a porous carbon composite material including the porous carbon, LATP, and nano silicon particles.

In a fourth step, in a nitrogen atmosphere, the porous carbon composite material was placed in a coating furnace. Then, a gas mixture of nitrogen and methane was introduced into the coating furnace at a ratio of 15 L/min:25 L/min. The coating furnace was then heated to 650°C and held at that temperature for 7.5 hours, to form a carbon shell, thereby obtaining a negative electrode material having a carbon shell and a core.

Afterwards, button-type half-cells were assembled and tested as in Example 1.

### Comparative Example 1

In a first step, 2.5 kg of a raw material of porous carbon was placed in a deposition furnace, nitrogen was introduced into the deposition furnace at a gas flow rate of 15 L/min for the purpose of protection, and the deposition furnace was heated to 600°C at a rate of 2°C/min and held at that temperature for 35 min. Next, a gas mixture of silane and nitrogen was introduced at a ratio of 10 L/min:50 L/min. The temperature was further maintained for 5.5 hours to allow the raw material of porous carbon and the silane to undergo vapor deposition, thereby obtaining a porous carbon composite material including the porous carbon and nano silicon particles.

In a fourth step, in a nitrogen atmosphere, the porous carbon composite material was placed in a coating furnace. Then, a gas mixture of nitrogen and methane was introduced into the coating furnace at a ratio of 15 L/min:25 L/min. The coating furnace was then heated to 650°C and held at that temperature for 7.5 hours, to form a carbon shell, thereby obtaining a negative electrode material having a carbon shell and a core.

Afterwards, button-type half-cells were assembled and tested as in Example 1.

### Comparative Example 2

In a first step, 2.5 kg of a raw material of porous carbon was placed in a deposition furnace, nitrogen was introduced into the deposition furnace at a gas flow rate of 15 L/min for the purpose of protection, and the deposition furnace was heated to 600°C at a rate of 2°C/min and held at that temperature for 35 min. Next, a gas mixture of disilane and nitrogen was introduced at a ratio of 10 L/min:50 L/min. The temperature was further maintained for 5.5 hours to allow the raw material of porous carbon and the silane to undergo vapor deposition, thereby obtaining a porous carbon composite material including the porous carbon and nano silicon particles.

In a fourth step, in a nitrogen atmosphere, the porous carbon composite material was placed in a coating furnace. Then, a gas mixture of nitrogen and methane was introduced into the coating furnace at a ratio of 15 L/min:25 L/min. The coating furnace was then heated to 650°C and held at that temperature for 7.5 hours, to form a carbon shell, thereby obtaining a negative electrode material having a carbon shell and a core.

Afterwards, button-type half-cells were assembled and tested as in Example 1.

Table 1 lists the rate performance test data of the button-type half-cells prepared in Examplary embodiments 1 to 3 and Comparative Examples 1 and 2.

**Table 1**

| Rate | Examplary embodiment 1 (mAh/g) | Examplary embodiment 2 (mAh/g) | Examplary embodiment 3 (mAh/g) | Comparative Example 1 (mAh/g) | Comparative Example 2 (mAh/g) |
|---|---|---|---|---|---|
| 0.1 C | 1669 | 1650 | 1641 | 1508 | 1500 |
| 0.5 C | 1467 | 1538 | 1411 | 1267 | 1202 |
| 1.0 C | 1245 | 1347 | 1196 | 1009 | 978 |
| 2.0 C | 1098 | 1119 | 992 | 756 | 766 |
| 5.0 C | 876 | 968 | 784 | 559 | 590 |

As can be seen from Table 1, compared with Comparative Examples 1 and 2, the button-type half-cells in the embodiments of the present invention exhibit an excellent rate performance. This is due to the fact that the core of the negative electrode material of the present application is loaded with LATP, which can effectively suppress the formation of silicon carbide and increase the interfacial transport rate of the cells during electrochemical reaction processes, thereby avoiding the specific capacity loss of the cells during charging and discharging processes.

Table 2 lists the comparison data of capacity retention rate of the button-type half-cells prepared in embodiments1 to 3 and Comparative Examples 1 and 2 after 100 cycles at a current density of 0.1 C and a temperature of 80°C.

**Table 2**

| | Examplary embodiment 1 | Examplary embodiment 2 | Examplary embodiment 3 | Comparative Example 1 | Comparative Example 2 |
|---|---|---|---|---|---|
| Capacity retention rate | 84.8% | 86.9% | 82.7% | 45.9% | 46.4% |

As can be seen from Table 2, compared with Comparative Examples 1 and 2, the button-type half-cells in the embodiments of the present invention maintain a cyclic retention rate of 80% or more under the test conditions. This is due to the fact that the core of the negative electrode material of the present application is loaded with LATP, which can enhance the cycling stability of the lithium-ion batteries under conditions with higher temperature.

### Examplary Embodiment4

In a first step, 68.96 g of lithium nitrate, 232.68 g of lanthanum nitrate, and 481.28 g of tetrabutyl titanate were weighed out as raw materials of the first solid electrolyte, added to 50 kg of ethanol, and then stirred for 2 hours. Then, 7.5 kg of a raw material of porous carbon was added, followed by stirring for 4 hours, to obtain a slurry.

In a second step, the slurry was first subjected to spray drying treatment at an air inlet temperature of 150°C and an air outlet temperature of 100°C to obtain sprayed particles. Then, the sprayed particles were placed in a high-temperature furnace at an argon flow rate of 10 L/min. Then, the high-temperature furnace was heated to 400°C at a rate of 2°C/min and held at that temperature for 5 hours, to obtain an LLTO-loaded porous carbon material. LLTO accounted for 3% of the total mass of the raw material of porous carbon.

In a third step, 2.5 kg of the porous carbon material was placed in a deposition furnace, hydrogen was introduced into the deposition furnace at a gas flow rate of 15 L/min for the purpose of protection, and the deposition furnace was heated to 400°C at a rate of 8°C/min and held at that temperature for 40 min. Next, a gas mixture of disilane and helium was introduced at a ratio of 40 L/min:50 L/min. The temperature was further maintained for 2 hours to allow the porous carbon material and the disilane to undergo vapor deposition, thereby obtaining a porous carbon composite material including the porous carbon, LLTO, and nano silicon particles.

In a fourth step, the porous carbon composite material and the LLTO slurry were mixed for spray drying treatment at an air inlet temperature of 150°C and an air outlet temperature of 100°C to obtain sprayed particles. Then, the sprayed particles were placed in a high-temperature furnace at an argon flow rate of 10 L/min. Then, the high-temperature furnace was heated to 400°C at a rate of 2°C/min and held at that temperature for 5 hours, to form an LLTO shell, thereby obtaining a negative electrode material with the LLTO shell and the core.

Afterwards, the prepared negative electrode was used to prepare electrode plates of a lithium-ion battery, and the electrode plates were assembled into button-type half-cells for testing, with details as follows.

First, the aforementioned negative electrode material, a conductive agent Super P, and a binder sodium carboxymethylcellulose were added to a mortar at a mass ratio of 8:1:1 and then ground. Then deionized water was added. A resulting mixture was pulped in a pulper to form a slurry, which was then coated onto a copper-foil current collector. Afterwards, the copper-foil current collector as an electrode plate was dried in a vacuum oven at 80°C for 12 hours. The dried electrode plate was then cut into discs with a diameter of 14 mm to serve as electrodes for the button-type half-cell.

Next, these electrode plates were assembled into button-type half-cells in an argon-filled glove box. A solvent for the oil-based electrolyte of the button-type half-cells is N-methyl pyrrolidone (NMP). A lithium plate was used as a counter electrode.

Finally, testing was conducted on a LAND battery testing system to evaluate the electrochemical performance of the button-type half-cells. The test condition was as follows: voltage window: 0.01 V-2 V.

### Examplary Embodiment 5

In a first step, 59.89 g of lithium hydroxide, 349.19 g of lanthanum oxide, and 88.04 g of zirconia were weighed out as raw materials of the first solid electrolyte, added to 45 kg of deionized water, and then stirred for 2 hours. Then, 7.5 kg of a raw material of porous carbon was added, followed by stirring for 5 hours, to obtain a slurry.

In a second step, the slurry was first subjected to spray drying treatment at an air inlet temperature of 400°C and an air outlet temperature of 160°C to obtain sprayed particles. Then, the sprayed particles were placed in a high-temperature furnace at an argon flow rate of 5 L/min. Then, the high-temperature furnace was heated to 800°C at a rate of 8°C/min and held at that temperature for 1 hours, to obtain an LLZO-loaded porous carbon material. LLZO accounted for 4% of the total mass of the raw material of porous carbon.

In a third step, 2.5 kg of the porous carbon material was placed in a deposition furnace, argon was introduced into the deposition furnace at a gas flow rate of 15 L/min for the purpose of protection, and the deposition furnace was heated to 1000°C at a rate of 4°C/min and held at that temperature for 30 min. Next, a gas mixture of silane and argon was introduced at a ratio of 10 L/min:20 L/min. The temperature was further maintained for 5 hours to allow the porous carbon material and the silane to undergo vapor deposition, thereby obtaining a porous carbon composite material including the porous carbon, LLZO, and nano silicon particles.

In a fourth step, in a nitrogen atmosphere, the porous carbon composite material was placed in a coating furnace. Then, a gas mixture of nitrogen and ethylene was introduced into the coating furnace at a ratio of 40 L/min:50 L/min. The coating furnace was then heated to 1000°C and held at that temperature for 2 hours, to form a carbon shell, thereby obtaining a negative electrode material having a carbon shell and a core.

### Examplary Embodiment 6

In a first step, 318.30 g of lithium chloride, 77.52 g of phosphorus, and 321.07 g of sulfur were weighed out as raw materials of the first solid electrolyte, added to 50 kg of ethanol, and then stirred for 1.5 hours. Then, 7.5 kg of a raw material of porous carbon was added, followed by stirring for 3.5 hours, to obtain a slurry.

In a second step, the slurry was first subjected to spray drying treatment at an air inlet temperature of 300°C and an air outlet temperature of 80°C to obtain sprayed particles. Then, the sprayed particles were placed in a high-temperature furnace at an helium flow rate of 8 L/min. Then, the high-temperature furnace was heated to 500°C at a rate of 4°C/min and held at that temperature for 3.5 hours, to obtain an Li₃PS₄-loaded porous carbon material. Li₃PS₄ accounted for 6% of the total mass of the raw material of porous carbon.

In a third step, 2.5 kg of the porous carbon material was placed in a deposition furnace, argon was introduced into the deposition furnace at a gas flow rate of 15 L/min for the purpose of protection, and the deposition furnace was heated to 800°C at a rate of 6°C/min and held at that temperature for 32 min. Next, a gas mixture of disilane and argon was introduced at a ratio of 20 L/min:30 L/min. The temperature was further maintained for 15 hours to allow the porous carbon material and the disilane to undergo vapor deposition, thereby obtaining a porous carbon composite material including the porous carbon, Li₃PS₄, and nano silicon particles.

In a fourth step, in an argon atmosphere, the porous carbon composite material was placed in a coating furnace. Then, a gas mixture of argon and propyne was introduced into the coating furnace at a ratio of 10 L/min:30 L/min. The coating furnace was then heated to 500°C and held at that temperature for 16 hours, to form a carbon shell, thereby obtaining a negative electrode material having a carbon shell and a core.

### Examplary Embodiment 7

In a first step, 234.45 g of lithium sulfide, 226.81 g of phosphorus pentasulfide phosphorus, and 139.57 g of germanium disulfide were weighed out as raw materials of the first solid electrolyte, added to 45 kg of ethanol, and then stirred for 2 hours. Then, 7.5 kg of a raw material of porous carbon was added, followed by stirring for 4 hours, to obtain a slurry.

In a second step, the slurry was first subjected to spray drying treatment at an air inlet temperature of 260°C and an air outlet temperature of 200°C to obtain sprayed particles. Then, the sprayed particles were placed in a high-temperature furnace at a helium flow rate of 7 L/min. Then, the high-temperature furnace was heated to 700°C at a rate of 6°C/min and held at that temperature for 3 hours, to obtain an Li₁₀GeP₂S₁₂-loaded porous carbon material. Li₁₀GeP₂S₁₂ accounted for 8% of the total mass of the raw material of porous carbon.

In a third step, 2.5 kg of the porous carbon material was placed in a deposition furnace, argon was introduced into the deposition furnace at a gas flow rate of 15 L/min for the purpose of protection, and the deposition furnace was heated to 700°C at a rate of 5°C/min and held at that temperature for 38 min. Next, a gas mixture of disilane and argon was introduced at a ratio of 10 L/min:25 L/min. The temperature was further maintained for 10 hours to allow the porous carbon material and the disilane to undergo vapor deposition, thereby obtaining a porous carbon composite material including the porous carbon, Li₁₀GeP₂S₁₂, and nano silicon particles.

In a fourth step, in a nitrogen atmosphere, the porous carbon composite material was placed in a coating furnace. Then, a gas mixture of nitrogen and butene was introduced into the coating furnace at a ratio of 10 L/min:20 L/min. The coating furnace was then heated to 800°C and held at that temperature for 8 hours, to form a carbon shell. Then, the porous carbon composite material with the carbon shell and the Li₁₀GeP₂S₁₂ slurry were mixed for spray drying treatment at an air inlet temperature of 400°C and an air outlet temperature of 200°C, to obtain sprayed particles. Then, the sprayed particles were placed in a high-temperature furnace at a helium flow rate of 7 L/min. Then, the high-temperature furnace was heated to 400°C at a rate of 6°C/min and held at that temperature for 5 hours, to form an Li₁₀GeP₂S₁₂ shell, thereby obtaining a negative electrode material having the carbon layer, the Li₁₀GeP₂S₁₂ shell, and the core.

The objects, technical solutions and advantageous effects of the present invention are further illustrated in detail in the specific embodiments described above. It will be appreciated that the description above only involves the specific embodiments of the present invention and is not intended to limit the protection scope of the present invention. Any modifications, equivalent substitutions, improvements and the like made within the spirit and principle of the present invention shall be construed as being included within the protection scope of the present invention.

## Claims

1. A negative electrode material, wherein a structure of the negative electrode material comprises a core and a shell;
the core comprises the following components: porous carbon, a first solid electrolyte, and nano silicon particles; the first solid electrolyte is loaded on a surface of the porous carbon and a pore structure of the porous carbon; the nano silicon particles are deposited in the pore structure of the porous carbon;
an outer surface of the core is coated with the shell; and the shell comprises the following component(s): a carbon material and/or a second solid electrolyte.

2. The negative electrode material according to claim 1, wherein the first solid electrolyte is an oxide solid electrolyte and/or a sulfide solid electrolyte.

3. The negative electrode material according to claim 1, wherein the second solid electrolyte is an oxide solid electrolyte and/or a sulfide solid electrolyte.

4. A preparation method for the negative electrode material according to any one of claims 1 to 3, comprising:
adding raw materials of a first solid electrolyte and a raw material of porous carbon into a solvent, and performing stirring to obtain a slurry;
performing heat treatment on the slurry to obtain a porous carbon material loaded with the first solid electrolyte;
in an inert atmosphere, performing vapor deposition on the porous carbon material and a silicon source gas to obtain a porous carbon composite material comprising the porous carbon, the first solid electrolyte, and nano silicon particles; and
in the inert atmosphere, performing coating treatment on the porous carbon composite material to obtain a shell comprising a carbon material and/or a second solid electrolyte, thereby obtaining a negative electrode material.

5. The preparation method according to claim 4, wherein the heat treatment comprises spray drying and high-temperature calcining;
the spray drying is performed under the following conditions: at an air inlet temperature of 150°C-400°C, and at an air outlet temperature of 80°C-200°C;
the high-temperature calcining is performed under the following conditions: at a temperature of 400°C-800°C for 1 hour to 5 hours.

6. The preparation method according to claim 4, wherein the vapor deposition is performed at a temperature of 400°C-1000°C for 2 hours to 15 hours.

7. The preparation method according to claim 4, wherein the coating treatment comprises coating with carbon and/or coating with the second solid electrolyte;
the coating with carbon is performed under the following conditions: at a temperature of 300°C-1000°C for 2 hours to 20 hours;
the coating with the second solid electrolyte comprises a spray drying stage and a high-temperature calcining stage;
the spray drying stage occurs under the following conditions: at an air inlet temperature of 150°C-400°C, and at an air outlet temperature of 80°C-200°C; and
the high-temperature calcining stage occurs under the following conditions: at a temperature of 400°C-800°C for 1 hour to 5 hours.

8. The preparation method according to claim 7, wherein a carbon source for the coating with carbon comprises one or more of alkane, alkene, and alkyne.

9. A negative electrode plate, comprising the negative electrode material according to any one of claims 1 to 3 or the negative electrode material prepared with the preparation method according to any one of claims 4 to 8.

10. A lithium-ion battery, comprising the negative electrode plate according to claim 9, wherein an electrolyte of the lithium-ion battery is an aqueous electrolyte or an oil-based electrolyte.
